Europäisches Patentamt

European Patent Office

Office européen des brevets

(19)

(11) Veröffentlichungsnummer : **0 119 290**
**B1**

(12)

# EUROPÄISCHE PATENTSCHRIFT

(45) Veröffentlichungstag der Patentschrift :
28.05.86

(21) Anmeldenummer : 83102826.1

(22) Anmeldetag : 22.03.83

(51) Int. Cl.⁴ : **H 04 B   3/54**

(54) Dreistufiges Einseitenband-Vormodulations-Trägerfrequenzsystem.

(43) Veröffentlichungstag der Anmeldung :
26.09.84 Patentblatt 84/39

(45) Bekanntmachung des Hinweises auf die Patenterteilung : 28.05.86 Patentblatt 86/22

(84) Benannte Vertragsstaaten :
**AT BE CH DE GB IT LI NL SE**

(56) Entgegenhaltungen :
DE-A- 2 050 028
DE-B- 1 063 648
FR-A- 1 043 494
**TECHNISCHE MITTEILUNGEN AEG TELEFUNKEN,
Band 70, Nr. 4-6, 1980, Seiten 164-169, Berlin, DE.,H:
MÖLICH: "Das TFH-Einseitenbandgerät E704"
SIEMENS ZEITSCHRIFT, Heft 4, April 1962, Seiten
305-308, Erlangen, DE., R.FEIL et al: "Einseitenband-
Trägerfrequenzgeräte mit Transistoren für Fernsprechen und Fernwirken auf Hochspannungsleitungen"**

(73) Patentinhaber : **ANT Nachrichtentechnik GmbH
Gerberstrasse 33
D-7150 Backnang (DE)**

(72) Erfinder : **Kübler, Ulrich, Ing.grad.
Wilhelm-Busch-Strasse 17
D-7150 Backnang (DE)**
Erfinder : **Busse, Heinz, Ing.grad.
Brombergerstrasse 17
D-7150 Backnang (DE)**
Erfinder : **Jaenicke, Walter, Ing.grad.
Innsbrucker Strasse 8
D-7150 Backnang (DE)**

(74) Vertreter : **Schickle, Gerhard, Dipl.-Ing. et al
ANT Nachrichtentechnik GmbH Patent- und Lizenzabteilung Gerberstrasse 33
D-7150 Backnang (DE)**

## Beschreibung

Die Erfindung betrifft ein Einseitenband-Vormodulations-Trägerfrequenzsystem nach dem Oberbegriff des Patentanspruchs 1. Ein solches System ist in dem Buch « Einführung in die Trägerfrequenztechnik » von Dr.-Ing. F. Ring, Verlagsbuchhandlung Erich Herzog, Goslar, 1955, auf den Seiten 57 und 59 beschrieben und wird zur Übertragung von 60 Nachrichtenkanälen im Trägerfrequenzkabelnetz der Deutschen Bundespost verwendet.

Daneben betreiben die Elektrizitätsver-sorgungsunternehmen eigene Nachrichtenüber-tragungsnetze durch Trägerfrequenzübertragung über Hochspannungsleitungen. Hierzu bestimmte Geräte, sogenannte TFH-Geräte, sind in der Siemens-Zeitschrift 1962, S. 305 bis 308, und in einem Sonderdruck des Aufsatzes « Ein neues Einseitenband-gerät für die Trägerfrequenzübertragung über Hochspannungsleitungen » aus der Zeitschrift « Elektro-Post », 1953, Heft 22, beschrieben. Diese geräte übertragen zwei Nachrichtenkanäle in benachbarter Bandlage, wobei der obere Nachrichtenkanal die Regellage, der untere die Kehrlage aufweist. Diese Geräte enthalten zwei Umsetzerstufen, wobei in der letzten Umsetzerstufe die Nachrichtenkanäle in die gewünschte Übertragungslage umgesetzt werden, wobei ferner im Sendeweg ein umstimmbares Sendefilter und im Empfangsweg ein umstimmbares Empfangsfilter vorgesehen sind.

In den Netzen der Elektrizitätsversorungsunternehmen kommt es oft vor, daß bei einer Erweiterung des Netzes die Übertragungslage von vorhandenen Geräten geändert werden muß. Bei den bekannten Geräten muß dabei nicht nur die Frequenz eines Trägergenerators geändert werden, sondern es müssen auch die Sendeund Empfangsfilter umgestimmt werden.

Aufgabe der Erfindung ist es, ein Trägerfrequenzsystem zur Übertragung von zwei Nachrichtenkanälen anzugeben, das mit Geräten der bekannten TFH-Systeme zusammenarbeiten kann und bei welchem zur Änderung der Übertragungslage nur die Änderung der Frequenz eines Trägergenerators notwendig ist.

Diese Aufgabe wird durch ein Trägerfrequenzsystem nach dem Patentanspruch 1 gelöst.

Vorteilhaft an dem erfindungsgemäßen Trägerfrequenzsystem ist, daß ein Wechsel der Übertragungslage schnell möglich ist, da das zeitraubende Umstimmen von Filtern entfällt. Ein weiterer Vorteil ist, daß gleiche Umsetzerstufen mit gleichen Filtern bestückt sind. Demgegenüber sind bei den bekannten TFH-Geräten den ein-zelnen Nachrichtenkanälen unterschiedliche Ka-nalfilter zugeordnet, was eine unerwünschte Typenvielfalt zur Folge hat und damit die Herstellung der Geräte erschwert.

Die Unteransprüche 2 und 3 geben zweckmäßige Weiterbildungen der Erfindung an, um die Zusammenarbeit mit solchen TFH-Geräten zu ermöglichen, bei denen in der Übertragungslage die Nullfrequenzen zusammenfallen bzw. bei denen die Nachrichtenkanäle in einander . entgegengesetzten Richtungen übertragen werden.

Die Weiterbildung nach dem Unteranspruch 4 ermöglicht in vorteilhafter Weise einen Bandwechselbetrieb.

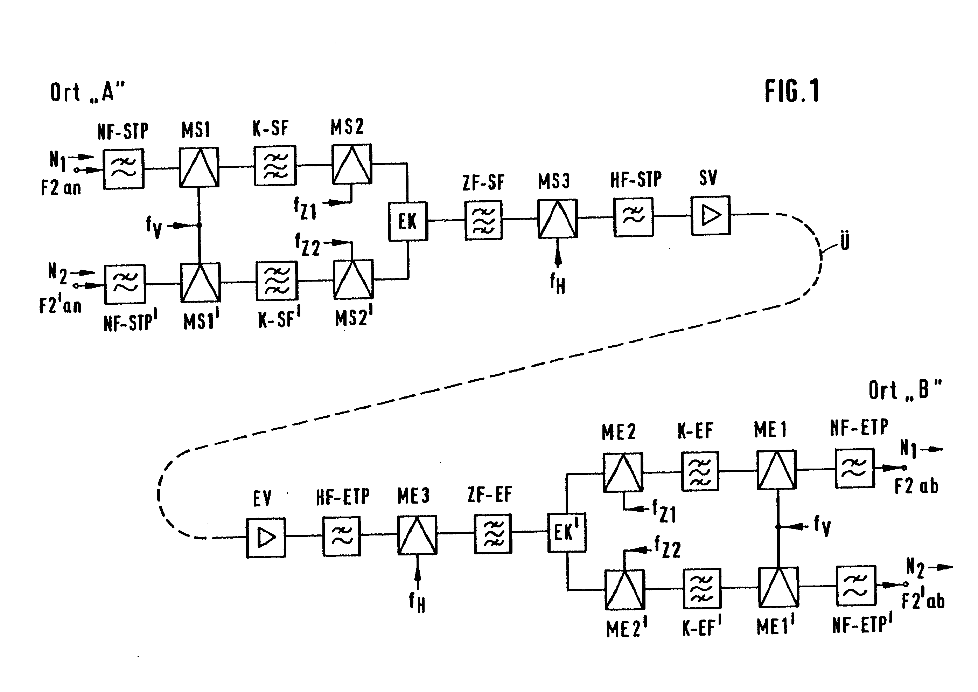

Die Erfindung wird anhand von in den Figuren 1 bis 8 gezeigten Ausführungsbeispielen beschrieben.

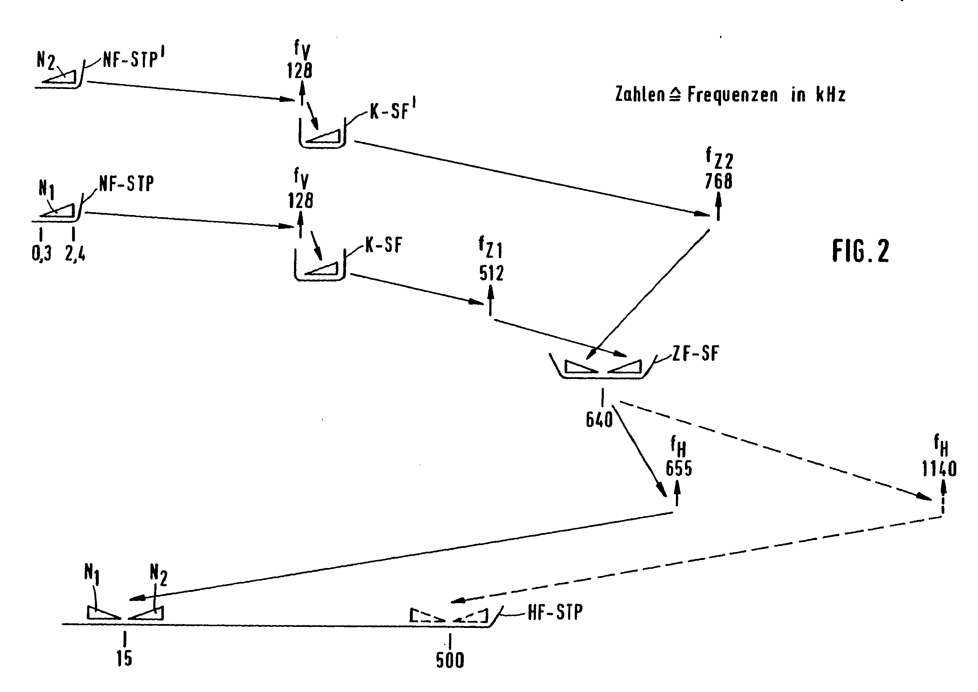

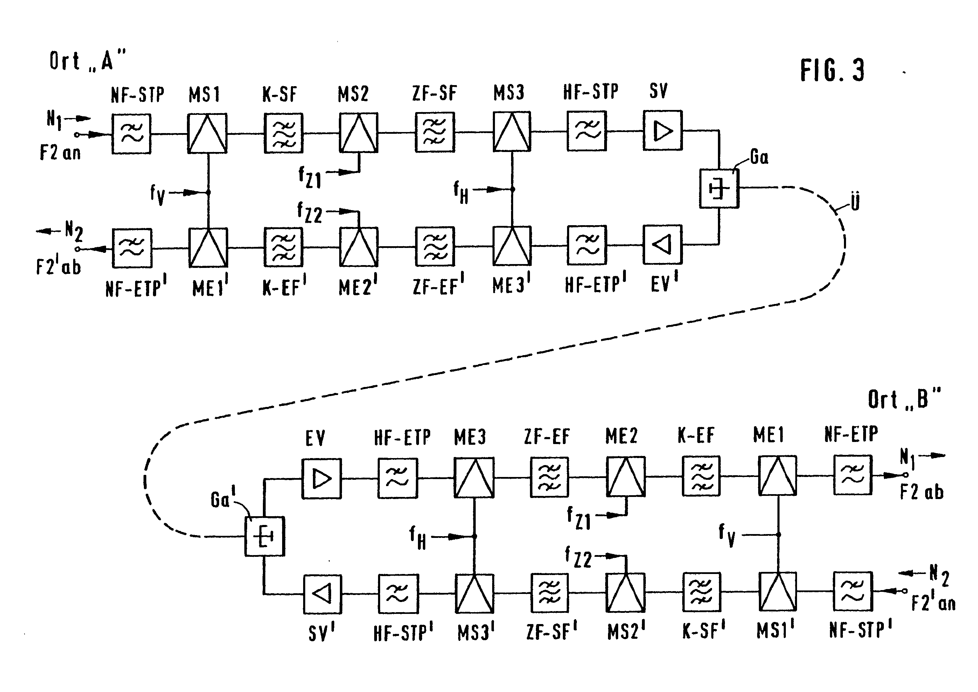

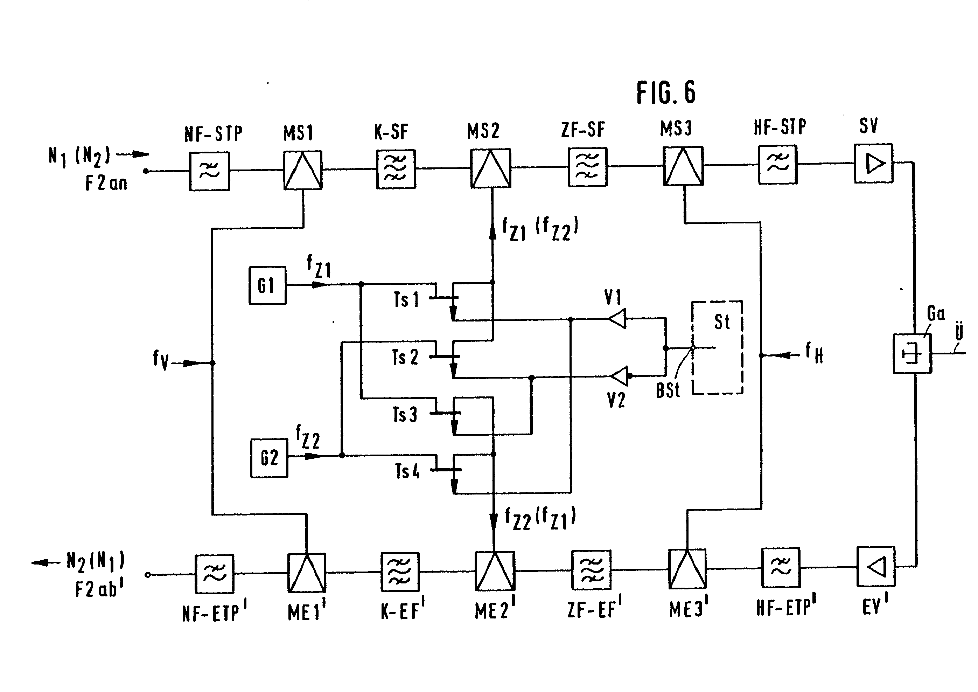

In den Figuren 1 und 3 sind Systeme nach dem Patentanspruch 1 dargestellt, wobei im System nach der Figur 1 die Nachrichtenkanäle in gleicher Richtung, im System nach der Figur 3 in einander entgegengesetzten Richtungen übertragen werden. Die Figuren 2, 4 und 5 zeigen Frequenzpläne der Systeme nach den Figuren 1 und 3. Die Figuren 6 bis 8 betreffen Ausführungsbei-spiele zum Patentanspruch 4.

In der Figur 1 sind die Geräte für die Übertra-gung von zwei Nachrichtenkanälen $N_1$ und $N_2$ vom Ort « A » über den Übertragungsweg Ü zum Ort « B » dargestellt. Für die Gegenrichtung ist noch ein zweiter, gleicher Gerätesatz notwendig. Das Gerät im Ort « A » besteht aus den Niederfrequenz-Sendetiefpässen NF-STP bzw. NF-STP', den ersten Sendemodulatoren MS1 bzw. MS1', den Kanal-Sendefiltern K-SF bzw. K-SF', den zweiten Sendemodulatoren MS2 bzw. MS2', ei-nem Entkopplungsnetzwerk EK, einem Zwischen-frequenz-Sendefilter ZF-SF, einem dritten Sende-modulator MS3, einem Hochfrequenz-Sende-tiefpaß HF-STP und einem Sendeverstärker SV.

Das Gerät im Ort « B » besteht aus einem Empfangsverstärker EV, einem Hochfrequenz-Empfangstiefpaß HF-ETP, einem dritten Empfangsmodulator ME3, einem Zwischenfrequenz-Empfangsfilter ZF-EF, einem Entkopplungsnetzwerk EK', den zweiten Empfangsmodulatoren ME2 bzw. ME2', den Kanal-Empfangsfiltern K-EF bzw. K-EF', den ersten Empfangsmodulatoren ME1 bzw. ME1' und den Niederfrequenz-Empfangstiefpässen NF-ETP bzw. NF-ETP'.

Die ersten Sende- bzw. Empfangsmodulatoren bilden mit den Kanal-Sende- bzw. Empfangsfiltern die erste Umsetzerstufe. Die zweiten Sende- bzw. Empfangsmodulatoren bilden mit den Entkopplungsnetzwerken und dem Zwischenfrequenz-Sende- bzw. Empfangsfilter die zweite Umsetzerstufe. Hierbei haben die Entkopplungsnetzwerke die Aufgabe, zwei Sende- bzw. Empfangsmodulatoren rückwirkungsfrei mit ei-nem Zwischenfrequenz-Sende- bzw. Empfangs-filter zu verbinden. Die dritte Umsetzerstufe besteht schließlich aus dem dritten Sende- bzw. Empfangsmodulator und dem Hochfrequenz-Sende- bzw. Empfangstiefpaß.

Ferner sind in den Geräten nicht gezeichnete Trägergeneratoren vorgesehen, welche die ersten Sende- bzw. Empfangsmodulatoren mit ei-nem Vormodulationsträger $f_V$, die zweiten Sende-bzw. Empfangsmodulatoren mit den Zwischen-frequenzträgern $f_{Z1}$ bzw. $f_{Z2}$ und die dritten

Sende- bzw. Empfangsmodulatoren mit einem Hochfrequenzträger $f_H$ versorgen.

Es folgt nun die Funktionsbeschreibung des Gerätes im Ort « A » anhand des Frequenzplanes der Figur 2. Die Nachrichtenkanäle $N_1$ und $N_2$ weisen je eine Bandbreite von 0,3 bis 2,4 kHz auf. Übertragen werden Gespräche oder Fernwirksignale. Der erste Nachrichtenkanal $N_1$ gelangt über die Eingangsklemme F2an und über den Niederfrequenz-Sendetiefpaß NF-STP zum ersten Sendemodulator MS1, wo er mit dem Vormodulationsträger $f_V$ von 128 kHz umgesetzt wird. Durch das folgende Kanal-Sendefilter K-SF wird das obere Seitenband ausgesiebt. Damit das untere Seitenband und ein evtl. Trägerrest ausreichend unterdrückt werden, weist das Kanal-Sendefilter steile Flanken auf.

Der zweite Nachrichtenkanal $N_2$ wird über die Eingangsklemmen F2'an und dem Niederfrequenz-Sendetiefpaß NF-STP' dem ersten Sendemodulator MS1' zugeführt und dort wie der erste Nachrichtenkanal $N_1$ mit der gleichen Vormodulationsträgerfrequenz von 128 kHz umgesetzt. Auch das folgende Kanal-Sendefilter K-SF' ist in der gleichen Weise ausgeführt wie das Kanal-Sendefilter K-SF und siebt ebenfalls das obere Seitenband aus.

In den nun folgenden zweiten Sendemodulatoren MS2 bzw. MS2' werden die zwei Nachrichtenkanäle mit unterschiedlichen Zwischenfrequenzträgern $f_{Z1}$ bzw. $f_{Z2}$ in die Zwischenfrequenzlage umgesetzt, und zwar der erste Nachrichtenkanal mit 512 kHz, der zweite mit 768 kHz. Die Zwischenfrequenzträger wurden so gewählt, daß das obere Seitenband des ersten Nachrichtenkanales oberhalb des unteren Seitenbandes des zweiten Nachrichtenkanales liegt und die Nullfrequenzen beider Nachrichtenkanäle zusammenfallen, in diesem Beispiel auf 640 kHz. Die Ausgänge der Sendemodulatoren MS2 und MS2' sind über das Entkopplungsnetzwerk EK mit dem Eingang des Zwischenfrequenz-Sendefilters ZF-SF verbunden, dessen Durchlaßbereich die oben erwähnten Seitenbänder umfaßt. Da die anderen, unerwünschten Seitenbänder weit vom Durchlaßbereich entfernt liegen, genügt hier ein Filter mit wenig steilen Flanken.

In der folgenden dritten Umsetzerstufe findet die Umsetzung in die Übertragungslage statt. In der Trägerfrequenzübertragungstechnik über Hochspannungsleitungen kommt hierfür der Frequenzbereich von 15 kHz bis 500 kHz in Frage. Deshalb ist in der Figur 2 sowohl die Umsetzung in die Übertragungslage von 15 kHz als auch (gestrichelt) in eine solche von 500 kHz dargestellt. Im ersten Fall wird das vom Zwischenfrequenz-Sendefilter ZF-SF durchgelassene Signal im dritten Sendemodulator mit einem Hochfrequenzträger $f_H$ von 655 kHz umgesetzt. Im zweiten Fall wird ein Hochfrequenzträger $f_H$ von 1 140 kHz benutzt. Der dem dritten Sendemodulator MS3 nachgeschaltete Hochfrequenz-Sendetiefpaß HF-STP ist so bemessen, daß das in dieser Umsetzerstufe entstehende obere Seitenband unterdrückt und nur das untere Seitenband über den nachfolgenden Sendeverstärker SV auf den Übertragungsweg gelangt. Wegen der Übertragung des unteren Seitenbandes weist der erste Nachrichtenkanal $N_1$ in der Übertragungslage die Kehrlage und der zweite Nachrichtenkanal $N_2$ die Regellage auf, wobei ihre Nullfrequenzen im ersten Fall bei 15 kHz im zweiten Fall bei 500 kHz liegen. Um auch hier den zweiten Nachrichtenkanal $N_2$ noch übertragen zu können, reicht der Durchlaßbereich des Hochfrequenz-Sendetiefpasses bis 502,4 kHz.

Der Generator für den Hochfrequenzträger $f_H$ ist in seiner Frequenz von 655 kHz bis 1 140 kHz leicht umstimmbar ausgeführt. So können nur durch Einstellung des entsprechenden Hochfrequenzträgers die Nachrichtenkanäle $N_1$ und $N_2$ in jede gewünschte Übertragungslage zwischen 15 kHz und 500 kHz umgesetzt werden.

Die Rückumsetzung der zwei Nachrichtenkanäle in die Niederfrequenzlage von 0,3 kHz bis 2,4 kHz geschieht in sinngemäß gleicher Weise im Ort « B », so daß an der Ausgangsklemme F2ab der Nachrichtenkanal $N_1$ und an der Ausgangsklemme F2'ab der Nachrichtenkanal $N_2$ abgenommen werden kann.

Die Figur 3 zeigt ein zweites Ausführungsbeispiel, das sich von dem ersten nach der Figur 1 durch die umgekehrte Übertragungsrichtung des zweiten Nachrichtenkanales $N_2$ unterscheidet. Dementsprechend befinden sich alle für den Empfang des zweiten Nachrichtenkanales $N_2$ bestimmten Baugruppen im Ort « A » und diejenigen für das Senden im Ort « B ». Ferner sind im Gegensatz zum ersten Ausführungsbeispiel für jeden Nachrichtenkanal eigene Zwischenfrequenz-Sende- bzw. Empfangsfilter ZF-SF, ZF-EF', ZF-EF bzw. ZF-SF', dritte Sende- bzw. Empfangsmodulatoren MS3, ME3', ME3 bzw. MS3'; Hochfrequenz-Sende- bzw. Empfangstiefpässe HF-STP, HF-ETP', HF-ETP bzw. HF-STP' sowie Sende- bzw. Empfangsverstärker SV, EV', EV bzw. SV' vorgesehen. Die beiden Nachrichtenkanäle werden außerdem erst an den Ausgängen der Sendeverstärker SV bzw. SV' bzw. den Eingängen der Empfangsverstärker EV bzw. EV' über Gabelschaltungen Ga bzw. Ga' zur Übertragung über den gemeinsamen Übertragungsweg Ü zusammengefaßt. Hierbei werden durch die Gabelschaltungen die Eingänge der Empfangsverstärker von den Ausgängen der Sendeverstärker entkoppelt.

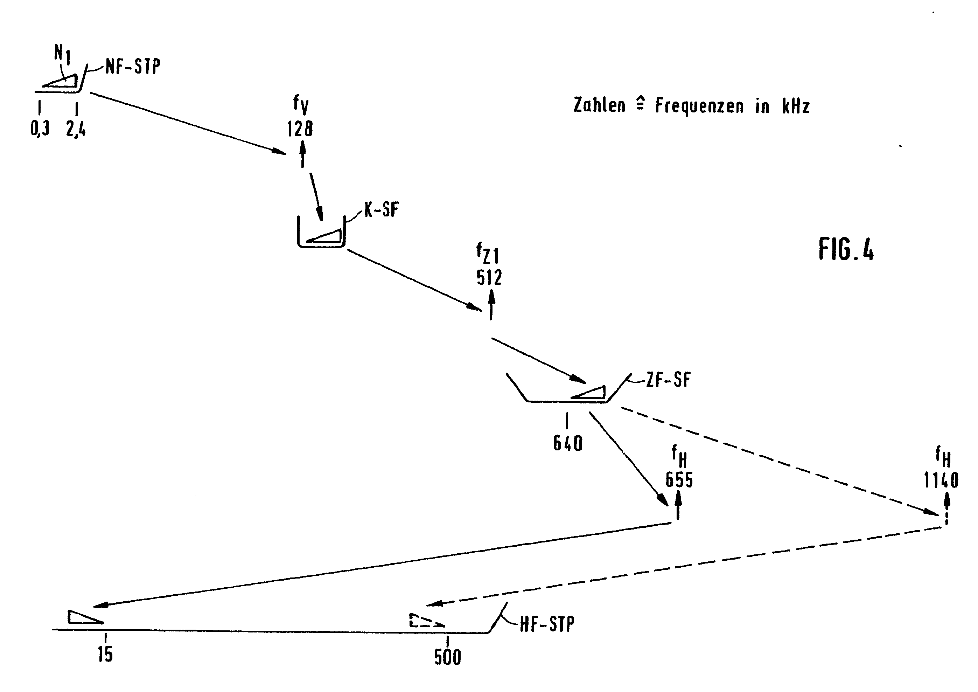

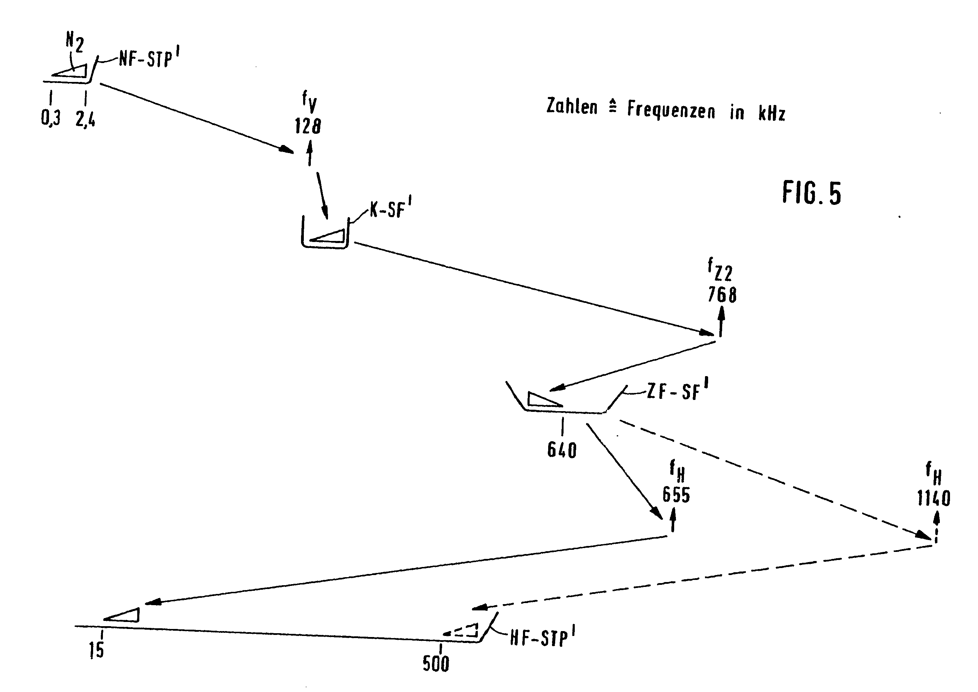

Die zugehörigen Frequenzpläne für die Sendeseiten sind in den Figuren 4 und 5 wiedergegeben, wobei die Figur 4 sich auf den ersten Nachrichtenkanal $N_1$ und die Figur 5 sich auf den zweiten Nachrichtenkanal $N_2$ bezieht. Für die Empfangsseiten, also für die Rückumsetzung in die Niederfrequenzlage, gelten diese Frequenzpläne sinngemäß. Außerdem gelten sinngemäß für diese Frequenzpläne die Ausführungen zum Frequenzplan nach der Figur 2.

Wegen der in den zuvor beschriebenen Beispielen verwendeten verhältnismäßig hohen Vormodulationsträgerfrequenz von 128 kHz lassen sich die Kanalsende- und Kanalempfangsfilter sehr wirtschaftlich als elektromechanische Filter herstellen. Sollen stattdessen Filter aus Spulen und Kodensatoren verwendet werden, so bietet sich eine Vormodulationsträgerfrequenz von 20 kHz an. Als erster bzw. zweiter Zwischenfrequenzträger kämen 560 kHz und 600 kHz in Frage, so daß sich eine Zwischenfrequenzlage mit einer Nullfrequenz von 580 kHz ergibt. Der Hochfrequenzträger muß dann sinngemäß von 595 kHz bis 1 080 kHz veränderbar sein.

Sollen in der Zwischenfrequenzlage die Nullfrequenzen der beiden Nachrichtenkanäle nicht zusammenfallen, so läßt sich dies durch entsprechende Wahl der Zwischenfrequenzträger oder des Vormodulationsträgers erreichen.

In den beiden zuvor erläuterten Ausführungsbeispielen ist jeweils im Ort « B » das gleiche erfindungsgemäße Gerät wie im Ort « A » vorgesehen. Dies ist jedoch nicht zwingend notwendig. Es kann sich vielmehr in einem der Orte eines der bekannten TFH-Geräte befinden. Wegen der übereinstimmenden Lage der Nachrichtenkanäle in der Übertragungslage können erfindungsgemäße Geräte mit bekannten Geräten zusammenarbeiten.

Anhand der Figuren 6 bis 8 werden Ausführungsbeispiele mit Bandwechsel, auch Wellenwechsel genannt, beschrieben. Bandwechsel wird, wie im Buch von Heinrich-Karl Podszeck « Trägerfrequenz-Nachrichtenübertragung über Hochspannungsleitungen », 4. Auflage, beschrieben, angewendet, wenn mehr als zwei Geräte über eine Übertragungskanal miteinander verbunden sind. In dem Aufsatz von H. Sander « Neue volltransistorisierte THF-Einseitenbandgeräte in Steckbauweise » in der Zeitschrift « Elektrizitätswirtschaft » 1965, S. 609 bis 613, ist beschrieben, wie der Bandwechsel in bekannten TFH-Geräten durch das Wechseln von Kanalfiltern mittels zweier Relais vorgenommen wird. Wegen der bekannten Nachteile von Relais, wie hoher Preis, großer Platzbedarf, Unmöglichkeit ihrer Integration in Halbleiterschaltungen, sind Lösungen ohne Relais von Vorteil.

Anhand der Figur 6 wird beschrieben, wie der Bandwechsel gemäß dieser Erfindung vorgenommen wird. Dargestellt ist eines von drei oder mehreren über den gemeinsamen Übertragungsweg Ü miteinander verbundenen Geräten. Die einzelnen Modulationsstufen sind in der gleichen Weise aufgebaut wie bei einem Gerät nach der Figur 3. Der Unterschied besteht in der Zuordnung der Zwischenfrequenzträger $f_{Z1}$ und $f_{Z2}$ zu den zweiten Sende- bzw. Empfangsmodulatoren MS2 und ME2'. Diese ist bei Geräten ohne Bandwechsel (Fig. 3) fest, bei Geräten mit Bandwechsel (Fig. 6) dagegen vertauschbar. Für diese Umschaltung sind vier Feldeffekt-Transistoren Ts1 bis Ts4, zwei Signalverstärker V1 und V2 und ein Steuerausgang BSt einer Steuerung St vorgesehen. Zur Erzeugung der zwei Zwischenfrequenzträger $f_{Z1}$ und $f_{Z2}$ dienen die zwei Generatoren G1 und G2.

Im Ruhezustand des Systems, also wenn keine Nachrichtenübertragung stattfindet, geben in allen Geräten die Steuerungen St an ihren Steuerausgängen BSt ein erstes Bandwechselsteuersignal ab, das über die Signalverstärker V1 die Transistoren Ts1 und Ts4 leitend steuert. Da die Signalverstärker V2 Inverter aufweisen, sind die von ihnen gesteuerten Transistoren Ts2 und Ts3 gesperrt. Über die leitend gesteuerten Transistoren Ts1 werden in allen Geräten die zweiten Sendemodulatoren MS2 mit dem ersten Zwischenfrequenzträger $f_{Z1}$ und über die Transistoren Ts4 die zweiten Empfangsmodulatoren ME2' mit dem zweiten Zwischenfrequenzträger $f_{Z2}$ beaufschlagt. In allen Stationen wird also der erste Nachrichtenkanal $N_1$ gesendet und der zweite Nachrichtenkanal $N_2$ empfangen. Eine Nachrichtenübertragung ist damit nicht möglich, aber auch nicht beabsichtigt.

Soll eine Nachrichtenübertragung stattfinden, so muß in einem der Geräte der Bandwechsel vorgenommen werden. Dazu ändert sich im abgehend belegten Gerät das erste Bandwechselsteuersignal in ein zweites Bandwechselsteuersignal. Dieser Wechsel kann z. B. durch das Abheben eines Telefon-Hörers von der Gabel bewirkt werden. Das zweite Bandwechselsteuersignal steuert über den Verstärker V1 die Transistoren Ts1 und Ts4 in den Sperrzustand und über den Verstärker V2 die Transistoren Ts2 und Ts3 in den Leitendzustand. Dadurch werden jetzt, wie in der Figur 6 in Klammern angegeben, der zweite Sendemodulator MS2 mit dem zweiten Zwischenfrequenzträger $f_{Z2}$ und der zweite Empfangsmodulator ME2' mit dem ersten Zwischenfrequenzträger $f_{Z1}$ beaufschlagt, so daß der zweite Nachrichtenkanal $N_2$ gesendet und der erste Nachrichtenkanal $N_1$ empfangen wird.

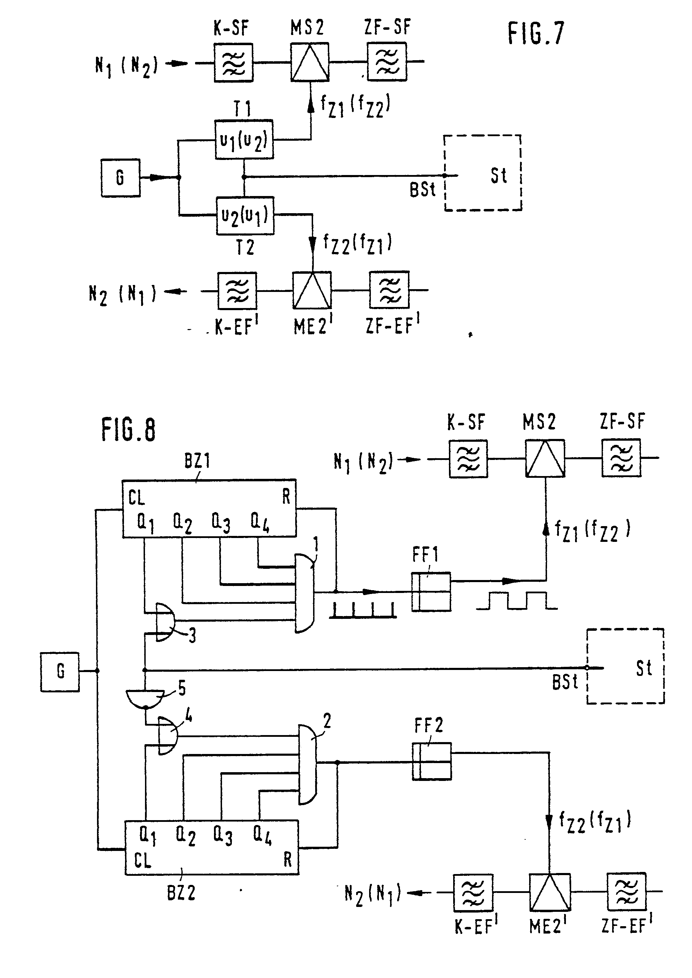

Eine andere Möglichkeit der Erzeugung der Zwischenfrequenzträger und ihrer Umschaltung wird anhand des Figur 7 erläutert. Es ist nur ein Generator G vorgesehen, der nur eine Schwingung mit hoher Frequenz liefert. Diesem sind ein erster Frequenzteiler T1 und ein zweiter Frequenzteiler T2 nachgeschaltet. Der Ausgang des ersten Frequenzteilers T1 ist mit dem Zwischenfrequenzträger-Eingang des zweiten Sendemodulators MS2, der Ausgang des zweiten Frequenzteilers T2 mit dem entsprechenden Eingang des zweiten Empfangsmodulators ME2' verbunden. Die Frequenzteiler können durch Steuersignale in ihren Teilungsverhältnissen umgeschaltet werden. Als Steuersignal wird das erste bzw. zweite Bandwechselsteuersignal verwendet.

Im Ruhezustand, also wenn die Steuerung St das erste Bandwechselsteuersignal abgibt, weist der erste Frequenzteiler T1 das erste Teilungsverhältnis u1 auf und beaufschlagt so den zweiten Sendemodulator MS2 mit dem ersten Zwischenfrequenzträger $f_{Z1}$. Gleichzeitig weist der zweite Frequenzteiler T2 das zweite Teilungsverhältnis u2 auf, so daß der zweite Empfangsmodulator ME2' mit dem zweiten Zwischenfrequenzträger $f_{Z2}$ beaufschlagt wird.

Bei Bandwechsel, also beim Auftreten des zweiten Bandwechselsteuersignales wird der erste Frequenzteiler T1 auf das zweite Teilungsverhältnis u2 umgeschaltet und liefert also den zweiten Zwischenfrequenzträger $f_{Z2}$. Sinngemäß wird der zweite Frequenzteiler T2 auf das erste Teilungsverhältnis u1 umgeschaltet, so daß er den ersten Zwischenfrequenzträger $f_{Z1}$ abgibt. Die Umschaltung der Nachrichtenkanäle $N_1$ und $N_2$ geschieht also in der gleichen Weise wie in der Anordnung nach der Figur 6. Vorteilhaft an der Anordnung nach der Figur 7 ist, daß an keine der verwendeten Bauelemente hohe Forderungen bezüglich Übersprech- und Klirrdämpfung gestellt werden müssen, wie dies bei den Transistoren Ts1 bis Ts4 der Figur 6 der Fall ist.

Eine besonders einfache Ausführung der Frequenzteiler T1 und T2 ergibt sich, wenn man den ersten Zwischenfrequenzträger $f_{Z1}$ n-mal größer und den zweiten Zwischenfrequenzträger $f_{Z2}$ (n + 1)-mal größer als die doppelte Vormodulationsträgerfrequenz wählt, wobei n eine ganze, positive Zahl ist. Vorausgesetzt wird, daß in der Zwischenfrequenzlage die Nullfrequenzen beider Nachrichtenkanäle zusammenfallen. Unter vorgenannten Voraussetzungen sind die Teilungsverhältnisse ganze Zahlen, wobei das zweite Teilungsverhältnis u2 um 1 kleiner ist als das erste Teilungsverhältnis u1. Als Teilungsverhältnis wird das Verhältnis der höheren, dem Frequenzteiler zugeführten zur niedrigeren, abgegebenen Frequenz definiert.

Werden in den Frequenzteilern Binärzähler verwendet, so genügt es zur Umschaltung des Teilungsverhältnisses, den Ausgang mit der Wertigkeit 1 wirksam bzw. unwirksam zu schalten. Eine entsprechende Weiterbildung der Erfindung ist in der Figur 8 dargestellt, wobei als Beispiel eine Vormodulationsträgerfrequenz $f_V$ von 20 kHz, ein erster Zwischenfrequenzträger $f_{Z1}$ von 560 kHz und ein zweiter Zwischenfrequenzträger $f_{Z2}$ von 600 kHz angenommen wurden.

Zur Erzeugung der zwei Zwischenfrequenzträger und zu ihrer Umschaltung dienen ein Generator G, der einen Takt mit einer Frequenz $f_T$ erzeugt, zwei Binärzähler BZ1 und BZ2, zwei Und-Schaltungen 1 und 2, zwei Oder-Schaltungen 3 und 4, ein Inverter 5 sowie zwei Flipflops FF1 und FF2. Der Takt wird den Takteingängen CL der beiden Binärzähler BZ1 und BZ2 zugeführt. Die vier Ausgänge Q1 bis Q4 des Binärzählers BZ1 sind mit vier Eingängen der Und-Schaltung 1 verbunden, und zwar die Ausgänge Q2 bis Q4 unmittelbar, der Ausgang Q1 über die Oder-Schaltung 3. Hierbei sind den Ausgängen Q1 bis Q4, wie bei Binärzählern üblich, die Wertigkeiten 1, 2, 4 bzw. 8 zugeordnet. Der Ausgang der Und-Schaltung 1 ist mit dem Takteingang des Flipflops FF1 und mit dem Rückstelleingang R des Binärzählers BZ1 verbunden. Der Ausgang des Flipflops FF1 ist an den Zwischenfrequenzträger-Eingang des zweiten Sendemodulators MS2 angeschlossen.

Der Binärzähler BZ2, die Und-Schaltung 2, die Oder-Schaltung 4 sowie das Flipflop FF2 sind untereinander und mit dem Zwischenfrequenzträger-Eingang des zweiten Empfangsmodulators ME2' in der gleichen Weise verbunden.

Die zweiten Eingänge der Oder-Schaltungen 3 und 4 sind mit dem Steuerausgang BSt der Steuerung St verbunden, und zwar der der Oder-Schaltung 3 unmittelbar, der der Oder-Schaltung 4 über den Inverter 5. .

Um die zwei Zwischenfrequenzträger $f_{Z1}$ und $f_{Z2}$ von 560 kHz bzw. 600 kHz aus einem Takt mit höheren Frequenz mittels Frequenzteilung zu erzeugen, könnte man als niedrigste, mögliche Frequenz eine solche von 8 400 kHz wählen. Aus einem später zu erläuternden Grund wird jedoch ein Takt mit doppelt so hoher Frequenz, nämlich mit $f_T$ = 16 800 kHz gewählt.

Im Ruhezustand gibt die Steuerung an ihrem Steuerausgang BSt das erste Bandwechselsteuersignal in der Form eines logischen Nein-Signales ab. Über die Oder-Schaltung 3 wird dadurch bewirkt, daß am Ausgang der Und-Schaltung 1 ein Ja-Signal erscheint, wenn der Binärzähler BZ1 die Stellung 15 erreicht. Durch dieses Ja-Signal wird der Binärzähler BZ1 über den Rückstelleingang R wieder auf Null gestellt. Es findet also eine Frequenzteilung durch 15 statt.

Der so am Ausgang der Und-Schaltung 1 gewonnene untersetzte Takt mit einer Frequenz von 1 120 kHz weist ein stark von Eins abweichendes Tastverhältnis auf und ist deshalb als Zwischenfrequenzträger nicht brauchbar. Durch die nachfolgende Teilung durch zwei im Flipflop FF1 entsteht der Zwischenfrequenzträger $f_{Z1}$ von 560 kHz mit dem Tastverhältnis von 1. Wegen dieser Teilung durch zwei mußte die Frequenz $f_T$ des Taktes doppelt so hoch wie an sich nötig gewählt werden.

Da im Binärzähler BZ2 wegen des Nein-Signales des ersten Bandwechselsteuersignales und seiner Invertierung durch den Inverter 5 der Ausgang Q1 nicht wirksam ist, findet die Rückstellung schon bei Erreichen der Stellung 14 statt. Die Frequenz $f_T$ des Taktes wird also durch 14 geteilt. Durch die nachfolgende Teilung durch zwei im Flipflop FF2 entsteht so der zweite Zwischenfrequenzträger von 600 kHz.

Wenn die Steuerung St das zweite Bandwechselsteuersignal abgibt, wird über die Oder-Schaltung 3 der Ausgang $Q_1$ des Binärzählers BZ1 unwirksam geschaltet. Es findet also hier eine Frequenzteilung durch 14 statt, und es wird der zweite Zwischenfrequenzträger $f_{Z2}$ von 600 kHz erzeugt. Im Binärzähler BZ2 ist dagegen der Ausgang $Q_1$ wirksam geschaltet, es findet eine Frequenzteilung durch 15 statt, und der erste Zwischenfrequenzträger $f_{Z1}$ von 560 kHz wird erzeugt.

## Patentansprüche

1. Einseitenband-Vormodulations-Trägerfrequenzsystem zur Übertragung von Nachrichtenkanälen ($N_1$, $N_2$) mit einer als Vormodulationsstufe ausgebildeten ersten Umsetzerstufe, mit einer zweiten Umsetzerstufe, in welcher

die Nachrichtenkanäle mittels Zwischenfrequenzträgern ($f_{Z1}$, $f_{Z2}$) in die Zwischenfrequenzlage umgesetzt werden und der ein mehrere Nachrichtenkanäle durchlassendes Zwischenfrequenz-Sendefilter (ZF-SF) nachgeschaltet ist, sowie einer dritten Umsetzerstufe, in der die Umsetzung in die Übertragungslage mittels eines Hochfrequenzträgers ($f_H$) erfolgt, wobei die Übertragungslage unterhalb der Zwischenfrequenzlage liegt und die Frequenz des Hochfrequenzträgers ($f_H$) oberhalb der Zwischenfrequenzlage liegt, wobei ferner der Frequenzbereich der Übertragungslage ein Mehrfaches des Frequenzbereiches von zwei Nachrichtenkanälen umfaßt, dadurch gekennzeichnet, daß ein erster Nachrichtenkanal ($N_1$) und ein zweiter Nachrichtenkanal ($N_2$) übertragen werden, daß der erste Nachrichtenkanal ($N_1$) mittels eines ersten Zwischenfrequenzträgers ($f_{Z1}$) und der zweite Nachrichtenkanal ($N_2$) mittels eines zweiten Zwischenfrequenzträgers ($f_{Z2}$) umgesetzt werden, wobei das obere Seitenband des ersten Nachrichtenkanales ($N_1$) oberhalb des unteren Seitenbandes des zweiten Nachrichtenkanales ($N_2$) liegt, daß das Zwischenfrequenz-Sendefilter (Zf-SF) das obere Seitenband des ersten Nachrichtenkanales ($N_1$) und das untere Seitenband des zweiten Nachrichtenkanales ($N_2$) durchläßt, daß die dritte Umsetzerstufe einen Hochfrequenz-Sendetiefpaß (HF-STP) aufweist, dessen Durchlaßbereich die Übertragungslage umfaßt, und daß die Frequenz des Hochfrequenzträgers ($f_H$) in einem solchen Bereich einstellbar ist, daß die Nachrichtenkanäle ($N_1$, $N_2$) jede Lage innerhalb der Übertragungslage annehmen können.

2. Einseitenband-Vormodulations-Trägerfrequenzsystem nach Anspruch 1, dadurch gekennzeichnet, daß die Nullfrequenzen beider Seitenbänder zusammenfallen.

3. Einseitenband-Vormodulations-Trägerfrequenzsystem nach Anspruch 1 oder 2, dadurch gekennzeichnet, daß der zweite Nachrichtenkanal ($N_2$) in einer gegenüber dem ersten Nachrichtenkanal ($N_1$) entgegengesetzten Richtung übertragen wird.

4. Einseitenband-Vormodulations-Trägerfrequenzsystem nach Anspruch 3, dadurch gekennzeichnet, daß die Zwischenquenzträger ($f_{Z1}$, $f_{Z2}$) miteinander vertauschbar sind.

## Claims

1. Single sideband premodulated carrier frequency system for the transmission of communications channels ($N_1$, $N_2$) with a first converter stage constructed as premodulation stage, with a second converter stage, in which the communications channels are translated by means of intermediate frequency carriers ($f_{Z1}$, $f_{Z2}$) into the intermediate frequency position and behind which is connected an intermediate frequency transmission filter (ZF-SF) passing several communications channels, as well as a third converter stage, in which the translation into the transmission position takes place by means of a high frequency carrier ($f_H$), wherein the transmission position lies below the intermediate frequency position and the frequency of the high frequency carrier ($f_H$) lies above the intermediate frequency position and wherein furthermore the frequency range of the transmission position comprises a multiple of the frequency range of two communications channels, characterised thereby, that a first communications channel ($N_1$) and a second communications channel ($N_2$) are transmitted, that the first communications channel ($N_1$) is translated by means of a first intermediate frequency carrier ($f_{Z1}$) and the second communications channel ($N_2$) is translated by means of a second intermediate frequency carrier ($f_{Z2}$), wherein the upper sideband of the first communications channel ($N_1$) lies above the lower sideband of the second communications channel ($N_2$) that the intermediate frequency transmission filter (Zf-SF) passes the upper sideband of the first communications channel ($N_1$) and the lower sideband of the second communications channel ($N_2$), that the third converter stage displays a high frequency transmission low-pass filter (HF-STP), the pass bandwidth of which comprises the transmission position, and that the frequency of the high frequency carrier ($f_H$) is settable in such a range that the communications channels ($N_1$, $N_2$) can assume any position within the transmission position.

2. Single sideband premodulated carrier frequency system according to claim 1, characterised thereby, that the zero frequencies of both sidebands co-incide.

3. Single sideband premodulated carrier frequency system according to claim 1 or 2, characterised thereby, that the second communications channel ($N_2$) is transmitted in a direction opposite to that of the first communications channel ($N_1$).

4. Single sideband premodulated carrier frequency system according to claim 3, characterised thereby, that the intermediate frequency carriers ($f_{Z1}$, $f_{Z2}$) are interchangeable.

## Revendications

1. Système à fréquence porteuse à pré-modulation et à bande latérale unique pour la transmission de canaux de télécommunications ($N_1$, $N_2$) avec un premier étage de conversion constituant un étage de prémodulation, avec un second étage de conversion, dans lequel les canaux de télécommunications sont convertis par les fréquences porteuses intermédiaires ($f_{Z1}$, $f_{Z2}$) dans la voie à fréquence intermédiaire et après lequel est connecté le filtre d'émission à fréquence intermédiaire (ZF-SF) permettant le passage de plusieurs canaux de télécommunications, ainsi qu'un troisième étage de conversion dans lequel s'effectue la conversion dans la voie de transmission au moyen d'une haute fréquence porteuse ($f_H$), la voie de transmission étant située en dessous de la voie de fréquence intermédiaire et la fréquence de la haute fréquence porteuse ($f_H$) étant située au-dessus de la voie à fréquence intermédiaire, la gamme de fréquence de la voie de transmission comprenant, en outre, un multiple de la gamme de fréquence des deux canaux de télécommunications, caractérisé en ce qu'un premier canal de télécommunications ($N_1$) et un second canal de télécommunication ($N_2$) sont transmis, en ce que le premier canal de télécommunications ($N_1$) est converti au moyen d'une première fréquence porteuse intermédiaire ($f_{Z1}$) et le second canal de télécommunications ($N_2$) est converti au moyen d'une seconde fréquence porteuse intermédiaire ($f_{Z2}$), la bande latérale supérieure du premier canal de télécommunications ($N_1$) étant située au-dessus de la bande latérale inférieure du second canal de télécommunications ($N_2$), en ce que le filtre d'émission à fréquence intermédiaire (Zf-SF) permet le pasage de la bande latérale supérieure du premier canal de télécommunications ($N_1$) et la bande latérale inférieure du second canal de télécommunications ($N_2$), en ce que le troisième étage de conversion présente un filtre d'émission passe-bas à haute fréquence (HF-STP) dont la bande passante comprend la voie de transmission, et en ce que la fréquence de haute fréquence porteuse ($f_H$) peut être réglée dans cette bande, et en ce que les canaux de télécommunications ($N_1$, $N_2$) peuvent prendre toutes positions situées dans la voie de transmission.

2. Système à fréquence porteuse à prémodulation et à bande latérale unique, selon la revendication 1, caractérisé en ce que les fréquences zéro des deux bandes latérales coïncident.

3. Système à fréquence porteuse à prémodulation et à bande latérale unique selon la revendication 1 ou 2, caractérisé en ce que le second canal de télécommunications ($N_2$) est transmis dans une direction opposée à celle du premier canal de télécommunications ($N_1$).

4. Système à fréquence porteuse à prémodulation et à bande latérale unique selon la revendication 3, caractérisé en ce que les fréquences porteuses intermédiaires ($f_{Z1}$, $f_{Z2}$) peuvent être commutées entre elles.

Ort „A"                                                                    FIG.1

Ort „B"

0 119 290

Zahlen ≙ Frequenzen in kHz

FIG.2

FIG. 3

Zahlen ≙ Frequenzen in kHz

FIG.4

Zahlen ≙ Frequenzen in kHz

FIG. 5

FIG. 6

N₁(N₂) → F2an

NF-STP   MS1   K-SF   MS2   ZF-SF   MS3   HF-STP   SV

f_Z1 (f_Z2)

G1   f_Z1

Ts 1

f_V →

Ts 2

V1

St

BSt

← f_H

V2

Ts 3

G2   f_Z2

Ts 4

f_Z2 (f_Z1)

Ga   Ü

← N₂(N₁) F2ab'

NF-ETP'   ME1'   K-EF'   ME2'   ZF-EF'   ME3'   HF-ETP'   EV'

0 119 290

FIG.7

FIG.8